# EUROPEAN PATENT APPLICATION

(11) **EP 2 457 425 A1**
(43) Date of publication of application: **30.05.2012**
(21) Application number: 11191140.0
(22) Date of filing: 29.11.2011
(51) Int. Cl.: A01B 13/02, A01B 33/02

(54) **Tiller**

(30) Priority: 30.11.2010 JP 2010266788
(71) Applicant: ISEKI & CO., LTD., Matsuyama-shi Ehime-ken 799-2692 (JP)
(72) Inventor: Nakagawa, Hideaki, Iyo-gun, Ehime 791-2193 (JP); Tomihisa, Akira, Iyo-gun, Ehime 791-2193 (JP); Kuroda, Kyosei, Iyo-gun, Ehime 791-2193 (JP); Ninomiya, Koji, Iyo-gun, Ehime 791-2193 (JP); Miyauchi, Masao, Iyo-gun, Ehime 791-2193 (JP)
(74) Representative: Grünecker, Kinkeldey, Stockmair & Schwanhäusser

(57) **Abstract**

A tiller, includes a of tilling tines (10), a till upper cover (11) which covers upper parts of the tilling tines (10), a ridging body (20) which is disposed at a rear end of the till upper cover (11) and which is a trapezoid form where an upper is longer than a lower side in rear view, a till cover body (C, D) which is disposed at a rear end of the till upper cover (11) and which is pivoted on a horizontal axis, a first connection implement (28) which connects the ridging body (20) and the till cover body (C, D) that is pivoted downward at the time of tilling work, and a second connection implement (35) which fixes the till cover body (C, D) that is pivoted upward in an upper position at the time of ridging work.

## Description

### BACKGROUND OF THE INVENTION

### Field of the Invention

The present invention relates to a tiller.

### Related art of the Invention

In a patent document of a Japanese Patent Application Laid-Open No. 2010-172219, a tiller switched into a ridging work position for forming a ridge or into a usual tilling work position is indicated.

### SUMMARY OF THE INVENTION

### TECHNICAL PROBLEM

In the patent document 1, it is troublesome to switch into the ridging work position or into the tilling work position since a change is needed about each of the plate of one pair of right and left. The present invention has as an object to solve such a problem.

### MEANS FOR SOLVING THE PROBLEMS

This invention adopts the following technical means, in order to solve the above-mentioned technical subject. The 1^{st} aspect of the present invention is a tiller, comprising:
a plurality of tilling tines (10);
a till upper cover (11) which covers upper parts of the tilling tines (10);
a ridging body (20) which is disposed at a rear end of the till upper cover (11) and which is a trapezoid form where an upper side is longer than a lower side in rear view;
a till cover body (C, D) which is disposed at a rear end of the till upper cover (11) and which is pivoted on a horizontal axis;
a first connection implement (28) which connects the ridging body (20) and the till cover body (C, D) that is pivoted downward at the time of tilling work; and
a second connection implement (35) which fixes the till cover body (C, D) that is pivoted upward in an upper position at the time of ridging work, wherein
the fixation by the second connection implement (35) is capable of being canceled when the till cover body (C, D) is pivoted downward; and
the connection by the first connection implement (28) is capable of being canceled when the till cover body (C, D) is pivoted upward.

The 2^{nd} aspect of the present invention is the tiller according to the 1^{st} aspect of the present invention, wherein
the second connection implement (35) is disposed in a position higher than a fulcrum about which the till cover body (C, D) is pivoted.

The 3^{rd} aspect of the present invention is the tiller according to the 1^{st} or 2^{nd} aspect of the present invention, comprising a regulation stick (31), wherein:
the ridging body (20) is configured to be pivoted on a horizontal axis to be inclined; and
the regulation stick (31) is capable of regulating an angle of the inclination.

The 4^{th} aspect of the present invention is the tiller according to the 3^{rd} aspect of the present invention, wherein:
the regulation stick (31) is capable of sliding upward and downward, with held by a regulation stick holder (33); and
the second connection implement (35) is disposed at the regulation stick holder (33).

The 5^{th} aspect of the present invention is the tiller according to the 3^{rd} or 4^{th} aspect of the present invention, wherein:
the till cover body (D) is configured in the shape of an oblong rectangle in rear view;
the till cover body (D) is configured to be disposed behind the ridging body (20) with overlapping the ridging body (20);
a cutout part (41) is formed in the till cover body (D); and
the regulation stick (31) penetrates the cutout part (41) when the till cover body (D) is pivoted upward.

### ADVANTAGEOUS EFFECTS OF THE INVENTION

According to the invention mentioned in Claim 1, since a switch into the riding work or into the tilling work can be performed by pivoting the till cover body, operation is easy.

According to the invention mentioned in Claim 2, since the till cover body is lift to a position higher than a pivoting fulcrum at the time of ridging work, it is easy to sight the formation state of a ridge.

According to the invention mentioned in Claim 3, the ridging body is easy to follow a farm field at the time of ridging work.

According to the invention mentioned in Claim 4, the till cover body can be pivoted to the ridging work position without abutting against other components, and can be fixed.

According to the invention mentioned in Claim 5, the regulation stick enters into the cutoff of the till cover body when the tilling cover is lifted to a position higher than the pivoting fulcrum thereof, the till cover body is fixed at a fixed position, and then the regulation stick becomes a posture to penetrate the till cover body, so the regulation stick does not interfere in pivoting the till cover body.

### BRIEF DESCRIPTION OF THE DRAWINGS

Fig. 1 is a side view illustrating a walk-behind tiller at the time of the ridging work;
Fig. 2 is a side view illustrating a walk-behind tiller at the time of the tilling work;
Fig. 3 is a rear view illustrating a walk-behind tiller at the time of the tilling work;
Fig. 4 is a rear view illustrating a state where a till cover body is a ridging work position;
Fig. 5 is a rear view illustrating a walk-behind tiller at the time of ridging work;
Fig. 6 is a rear view illustrating a modified example of a walk-behind tiller at the time of tilling work;
Fig. 7 is a rear view illustrating a modified example of a state where a till cover body is a ridging work position; and
Fig. 8 is a rear view illustrating a modified example of a walk-behind tiller at the time of ridging work.

### PREFERRED EMBODIMENTS OF THE INVENTION

Basic composition of a walk-behind tiller in accordance with the present invention will be described based on figures. In addition, "front or rear" in the present Embodiment indicates a direction of movement of a body, and "left or right" indicates a left side or a right side of the body in the state where the body is suitable in the advance direction.

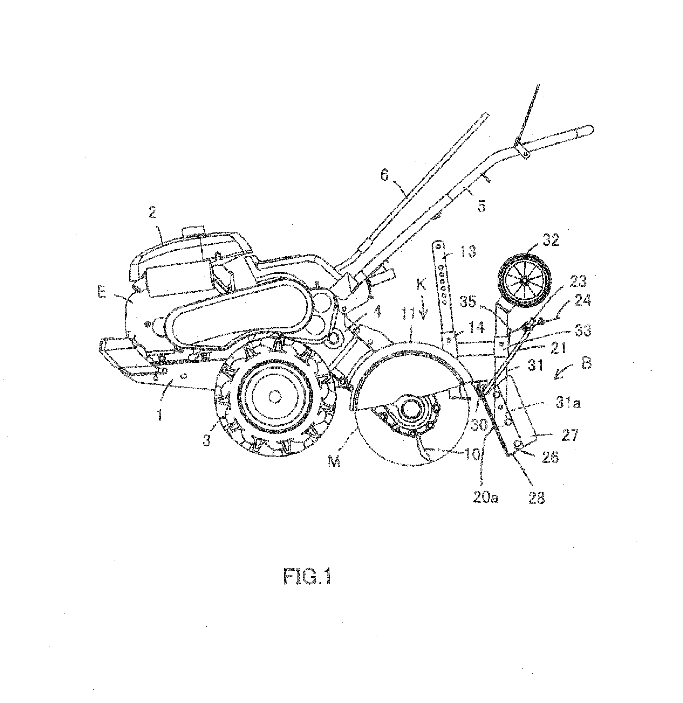

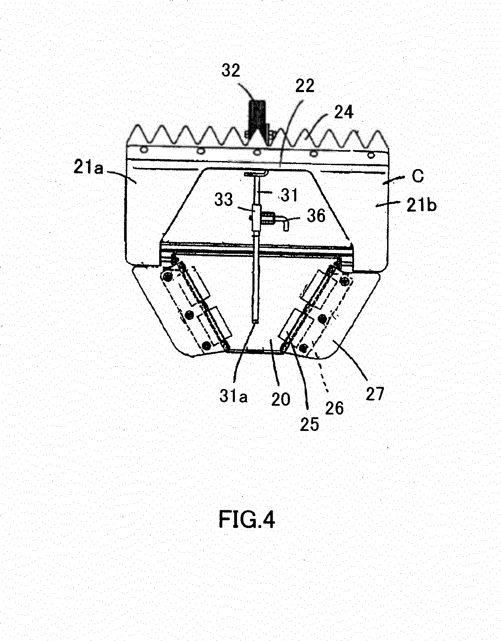

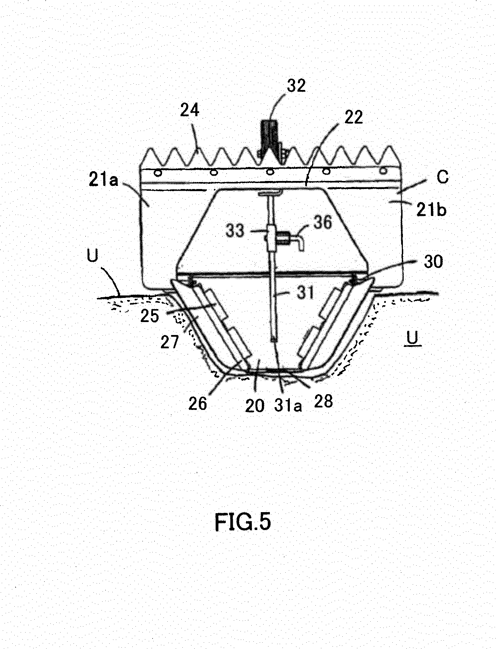

As shown in Figs. 1 to 5, an engine E and a fuel tank 2 are mounted above a main body frame 1 at a front part of a main body, a run wheel 3 is disposed at a central part of the main body in the front-and-rear direction, and a tilling unit K is disposed at a rear part of the main body. A power transfer axis (not shown), which is equipped inside by a power transfer case 4, transfers power from the central part of the main body in the front-and-rear direction to the tilling unit K in post-going down. An operation handle unit 5 prolonged in post-going up from the central part of the main body in the front-and-rear direction is disposed. A sign "6" indicates a gearshift lever.

The tilling unit K comprises a well-known plurality of tilling tines 10 which are rotated about a horizontal axis and a till upper cover 11 which is disposed above rotating locus M of the tilling tines 10. The rear part of the till upper cover 11 is configured to be penetrate by a resistance stick 13. A resistance stick holder 14 which holds the resistance stick 13 to be capable of sliding upward and downward is disposed at an upper surface of the till upper cover 11.

The upper end of a till rear cover B is connected with a rear end part of the till upper cover 11, and the till rear cover B is configured to hang down. The till rear cover B includes a ridging plate 20 disposed at a central part in the left-and-right direction, tilling plates 21 disposed on the left side and the right side, and a connection plate 22 to connect the tilling plate 21 a on the left side and the tilling plate 21b on the right side. The till rear cover B is formed in the shape of an oblong rectangle in rear view.

The ridging plate 20 is a trapezoid form where an upper side is longer than a lower side in rear view. The ridging plate 20 consists of a steel plate so that a ridging surface 20a which is the front surface is flat. The left and right tilling plates 21 a, 21 b are configured to be a trapezoid form.

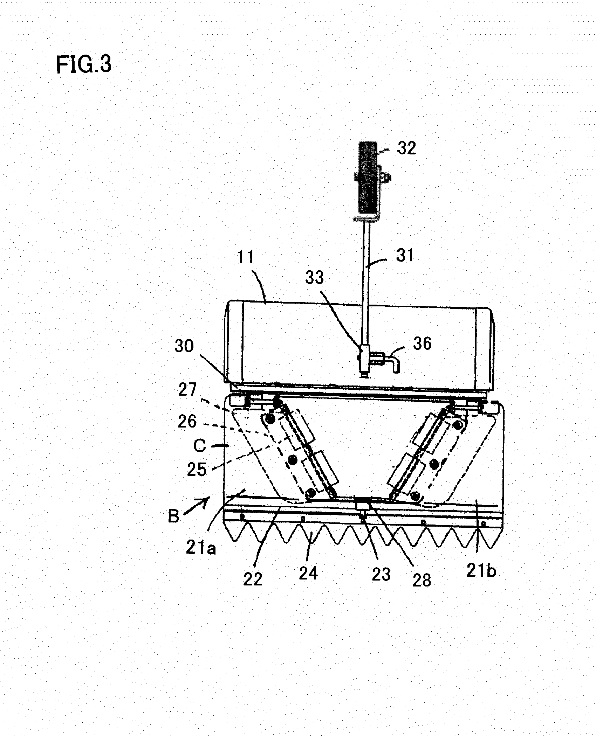

As shown in Fig. 3, the connection plate 22 which connects the left and right tilling plates 21 a, 21b is configured to extend over the lower part of the ridging plate 20 from bottom ends of the left and right tilling plates 21 a, 21b b in the present Embodiment. In the present Embodiment, the left and right tilling plates 21 a, 21b and the connection plate 22 are configured to be adhered by welding. A connection pin 23 is attached to the left-and-right central part of the connection plate 22. The connection pin 23 is a connection implement which connects the connection plate 22 with the ridging plate 20 for doing a below-mentioned usual tilling work or connects the connection plate 22 pivoted upward with a fixed position for doing the ridging work forming a ridge U. Moreover, a till smooth body 24 which has a plurality of triangle shapes formed with rubber or resin is disposed.

In the present Embodiment, the till cover body C is configured to be unified by combining the tilling plates 21 a, 21 b and the connection plate 22, but as a modified example, the tilling cover can be configured to form a cutout of the shape of the ridging plate at a left-and-right central part of one steel plate which consists the left and right tilling plates and the connection plate. Moreover, a till cover body can be formed by an elastic component made from rubber or resin.

Hinges 25 are attached to the left end part and the right end part of the ridging plate 20. Ridge side push plates 26 are attached to the left end part and the right end part of the ridging plate 20 through the hinge 25. The ridge side push plate 26 is configured to be pivoted rearward on a vertical axis from the position of the front surface of the ridging plate 20, a elastic plate 27 formed with rubber or resin is attached to the rear surface of the ridge side push plate 26, and the elastic plate 27 is configured so that the tip thereof is arranged in the position by the side of rear rather than the rear end of the ridge side push plate 26 when the ridge side push plate 26 is pivoted rearward. The lower end part of the ridging plate 20 is formed to be crooked rearward, a tilling work connection implement 28 is formed in that crooked part, the tilling work connection implement 28 forms a insertion hole (not shown) into which a connection pin is inserted, and the ridging plate 20 and the till cover body C are configured to be capable of connecting.

The till cover body C and the ridging plate 20 are configured to be capable of being pivoted separately on a pivoting axis 30 which is a horizontal axis when the till cover body C is not connected with the ridging plate 20. The till cover body C and the ridging plate 20 are configured to be pivoted as one when the till cover body C is connected with the ridging plate 20. The pivoting axes 30 are disposed in a pair of right and left, and the pair of pivoting axes 30 connects the right-and-left end of the ridging plate 20 and the tilling plates 21 a, 21 b.

A sign "31" indicates a regulation stick, the regulation stick 31 is configured so that a stick part 31a is formed in one end thereof and a tail wheel 32 is attached to the other end thereof, and the configuration to be capable of choosing whether the tail wheel 32 is supported with an upward posture or it supports with a downward posture with the regulation stick holder 33 supporting a slide of the regulation stick 31 is adopted. A sign "36" indicates a pin for fixing a position of the regulation stick 31.

The regulation stick holder 33 is configured to be disposed at a position that is behind the resistance stick holder 14 and is higher than the pivoting axis 30, and to be connected with the resistance stick holder 14 by a connection body 34. Moreover, a ridging work connection implement 35 is attached to the regulation stick holder 33, and the ridging work connection implement 35 forms a insertion hole (not shown) into which the connection pin 23 is inserted for fixing the till cover body C in a lift position when the till cover body C is pivoted upward to be lifted.

In addition, an example of the first connection implement according to the present invention corresponds to the tilling work connection implement 28. An example of the second connection implement according to the present invention corresponds to the ridging work connection implement 35. An example of the ridging body according to the present invention corresponds to the ridging plate 20. As another example, a block type or a frame type can be used.

Next, the usual tilling work and the ridging work which forms a ridge will be described in order of below.

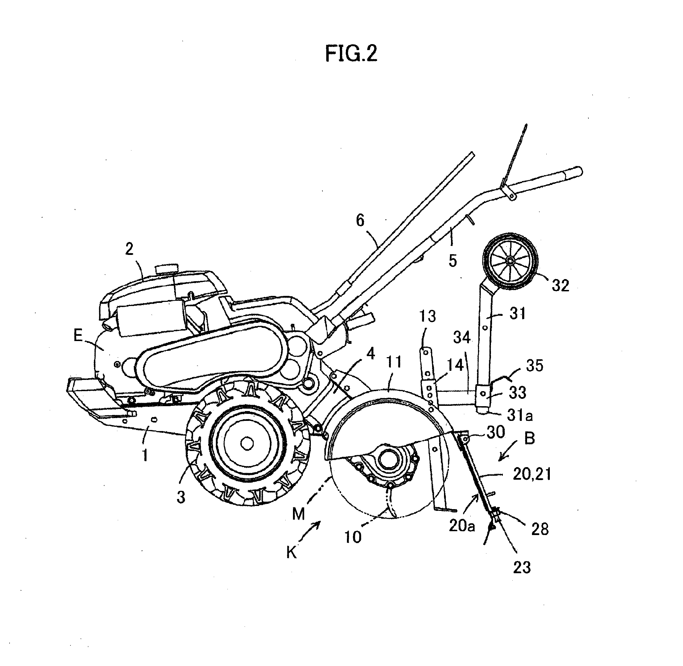

As shown in Fig. 2 and Fig. 3, at the time of tilling work, the till cover body C is a posture to hang down. That is, the connection pin 23 is inserted into the tilling work connection implement 28, the till cover body C (the tilling plate 21 a, 21 b) and the ridging plate 20 are made a connection state to be configured to be pivoted as one on the pivoting axis 30 in the front-and-rear direction. At this time, the ridge side push plate 26 is disposed with a horizontal posture in the almost same position as the front surface of the ridging plate 20, and the ridging plate 21 abuts against the rear surfaces of the elastic plate 27 and the ridge side push plate 26. And a worker slides the resistance stick 13 downward to set in a use state, and slides the regulation stick 31 upward to a position in which the stick part 31 a thereof does not abut against the rear surface of the ridging plate 20 being pivoted rearward.

The worker puts the engine E into operation, grippes the operation handle unit 5, and carries out an advance run, and the tilling work is performed by the tilling tines 10 rotating while the tip of the resistance stick 13 is buried into the ground to be resisting. While the tilling work is performed by the tilling tines 10, the surface of the farm field is smoothed by the till smooth body 24, so that appearance of the farm field tilled becomes good.

As shown in Fig. 1, Fig. 4, and Fig. 5, at the time of ridging work, the till cover body C is lifted.

The connection pin 23 is released from the tilling work connection implement 28, the till cover body C is jumped upward, the connection pin 23 is inserted into the ridging work connection implement 35, and the till cover body C is fixed in a lift position (state of Fig. 3). And, the regulation stick 31 is slid downward with the state that the stick part 31a is turned downward, and the regulation stick 31 is set to a position in which the tip of the stick part 31 a counters behind the ridging plate 20. And the resistance stick 13 is slid upward to set in a not-use state.

The worker puts the engine E into operation, grippes the operation handle unit 5, and carries out an advance run, so that the soil, which is tilled by the tilling tines 10 and bounds back, hits the ridging surface 20a that is the front surface of the ridging plate 20, and the ridging plate 20 is pivoted rearward by work anti-power. Then, the stick part 31 a of the regulation stick 31 abuts against the rear surface of the ridging plate 20, and it is regulated that the ridging plate 20 is pivoted upward and rearward more. Then, soil which hits the front surface of the ridging plate 20 overflows into the right and left of the ridging plate 20 to form a ridge U. In addition, the pair of right and left ridge side push plates 26 is pushed rearward from the horizontal posture by an action of soil overflowing into right and left, and henceforth, the ridge side push plates 26 push the side of the ridge U to form the side of the ridge U. And the side of the formed ridge is arranged by the pair of right and left elastic plates 27. The ridge side push plates 26 and the elastic plates 27 form the side of the ridge while following the side of the ridge by action of the hinge 25.

In addition, when only moving the tiller, it becomes easy to move by placing the tail wheel 32 upside down and grounding the tail wheel 32.

Advantageous effects of the present Embodiment will be described below.

At the time of ridging work, since the till cover body C can be pivoted to a non-tilling work position by one-time operation, it becomes easy to switch into the ridging work or into the tilling work.

Since the till cover body is lifted to a position higher than the pivoting axis 30 and is fixed in the position at the time of ridging work, a worker sights easily the formation state of a ridge while making control.

Since the ridging plate 20 is pivoted rearward at the time of ridging work and the motion thereof is regulated with the regulation stick 31, it is easy to emit soil to the right and left of the ridging plate 20. Moreover, since the ridging plate 20 is pivoted flexibly, it is easy to follow according to a state of a farm field.

The till cover body C can be pivoted to a ridging work position, i.e., a non-tilling work position, without abutting against other components, and can be fixed.

Since the side of the ridge U is formed by the ridge side push plate 26 and is smoothed by the elastic plate 27 as well, appearance of the side of the ridge U can be made good.

Since the connection plate 22 is formed horizontally over the underside of the tilling plate 21 a, 21b and the ridging plate 20, and the till smooth body 24 is disposed at a under part thereof, appearance of the farm field tilled at the time of tilling work can be made good.

Since the tilling work connection implement 28 can serve as weight of the ridging plate 20 by disposing the tilling work connection implement 28 at the lower part of the ridging plate 20, an action of ridging by the ridging plate 20 becomes good.

Since a pivoting angle of the ridging plate 20 at the time of the ridging work can be set up arbitrarily by the ability to adjust a height position of the regulation stick 31, the ridge U of desired form can be formed. Moreover, since the tail wheel 32 is equipped with the end of the regulation stick 31, the tail wheel 32 can be easily grounded and used at the time of movement. In addition, the pivoting angle of the ridging plate 20 mentioned above corresponds to "the angle of the inclination" according to the present invention.

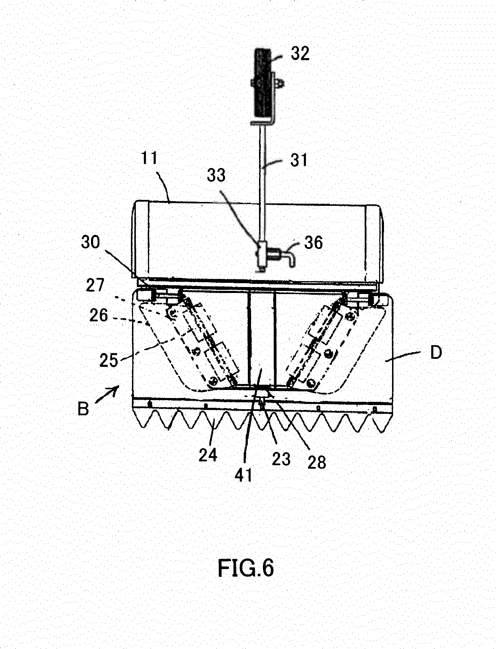

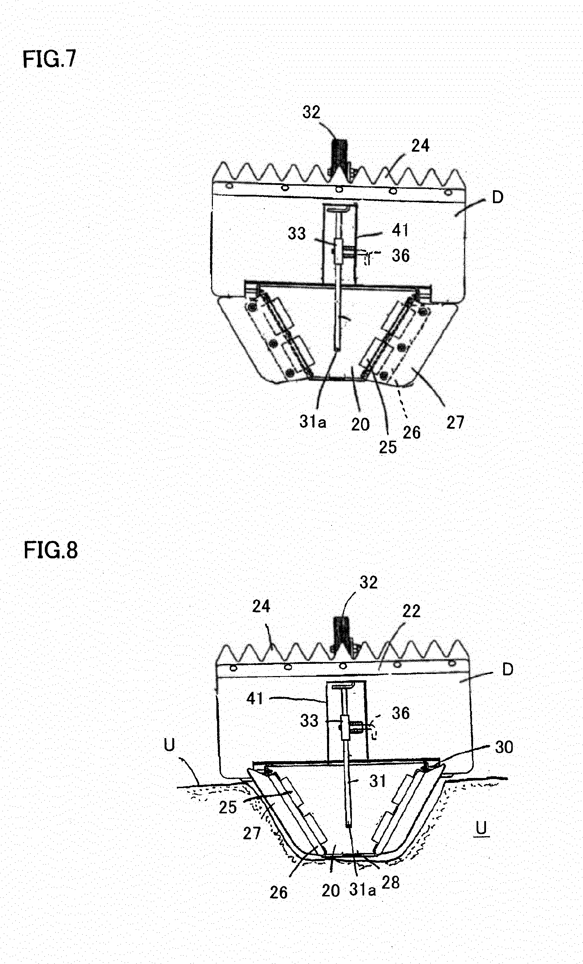

Next, Embodiment shown in Fig. 6 to Fig. 8 will be described.

Fig. 6 to Fig. 8 generally correspond to Fig. 3 to Fig. 5 respectively, and also from technical thought the contents of lifting the till cover body at the time of ridging work are common. Difference is that the form of the till cover body D of Fig. 6 to Fig. 8 differs from the form of the till cover body C of Fig. 3 to Fig. 5.

That is, the till cover body D is formed with an approximately rectangle-like plate in rear view, and a part thereof is disposed behind the ridging plate 20 with overlapping the ridging plate 20. And a longwise cutout part 41 is formed in the right-and-left central part of the till cover body D. At the time of ridging work, till cover body D is lifted, so that the regulation stick 31 is inserted into the cutout part 41 without abutting against the till cover body D. And the till cover body D is fixed to a ridging work connection implement 35, so that the regulation stick 31 become a posture to penetrate the till cover body D.

The effect of the configuration shown in Fig. 6 to Fig. 8 is the same as that of the above-mentioned configuration shown in Fig. 3 to Fig. 5 generally.

### Reference Signs List

- 10: tilling tine
- 11: till upper cover
- 20: ridging body (ridging plate)
- 21: tilling plate
- 22: connection plate
- 28: first connection implement (tilling work connection implement)
- 31: regulation stick
- 33: regulation stick holder
- 35: second connection implement (ridging work connection implement)
- B: till rear cover
- C: till cover body
- D: till cover body (modified example)

## Claims

1. A tiller, comprising:
a plurality of tilling tines (10);
a till upper cover (11) which covers upper parts of the tilling tines (10);
a ridging body (20) which is disposed at a rear end of the till upper cover (11) and which is a trapezoid form where an upper side is longer than a lower side in rear view;
a till cover body (C, D) which is disposed at a rear end of the till upper cover (11) and which is pivoted on a horizontal axis;
a first connection implement (28) which connects the ridging body (20) and the till cover body (C, D) that is pivoted downward at the time of tilling work; and
a second connection implement (35) which fixes the till cover body (C, D) that is pivoted upward in an upper position at the time of ridging work, wherein
the fixation by the second connection implement (35) is capable of being canceled when the till cover body (C, D) is pivoted downward; and
the connection by the first connection implement (28) is capable of being canceled when the till cover body (C, D) is pivoted upward.

2. The tiller according to Claim 1, wherein
the second connection implement (35) is disposed in a position higher than a fulcrum about which the till cover body (C, D) is pivoted.

3. The tiller according to Claim 1 or 2, comprising a regulation stick (31), wherein:
the ridging body (20) is configured to be pivoted ona horizontal axis to be inclined; and
the regulation stick (31) is capable of regulating an angle of the inclination.

4. The tiller according to Claim 3, wherein:
the regulation stick (31) is capable of sliding upward and downward, with held by a regulation stick holder (33); and
the second connection implement (35) is disposed at the regulation stick holder (33).

5. The tiller according to Claim 3 or 4, wherein:
the till cover body (D) is configured in the shape of an oblong rectangle in rear view;
the till cover body (D) is configured to be disposed behind the ridging body (20) with overlapping the ridging body (20);
a cutout part (41) is formed in the till cover body (D); and
the regulation stick (31) penetrates the cutout part (41) when the till cover body (D) is pivoted upward.
